# EUROPÄISCHE PATENTANMELDUNG

(11) **EP 4 137 446 A1**
(43) Veröffentlichungstag der Anmeldung: **22.02.2023**
(21) Anmeldenummer: 22190071.5
(22) Anmeldetag: 11.08.2022
(51) Int. Cl.: B67C 3/22

(54) **VORRICHTUNG ZUM BEHANDELN VON BEHÄLTNISSEN MIT ABGESTÜTZTEM REINRAUM**

(30) Priorität: 16.08.2021 DE 102021121177
(71) Anmelder: Krones AG, 93073 Neutraubling (DE)
(72) Erfinder: Suppes, Waldemar, Neutraubling (DE); Wittmann, Christian, Neutraubling (DE); Gerngross, Florian, Neutraubling (DE); Theen, Daniel, Neutraubling (DE); Geltinger, Florian, Neutraubling (DE); Peter, Daniel, Neutraubling (DE)
(74) Vertreter: Bittner, Bernhard

(57) **Zusammenfassung**

Vorrichtung (1) zum Behandeln von Behältnissen (10) mit einer Transporteinrichtung (2), welche die Behältnisse (10) wenigstens abschnittsweise entlang eines vorgegebenen Transportpfads (T) transportiert und mit einer Vielzahl von Behandlungseinrichtungen, welche die Behältnisse wenigstens zeitweise während des Transports entlang des Transportpfads behandeln, wobei die Vorrichtung (1) einen Reinraum (20) aufweist, innerhalb dessen die Behältnisse während ihrer Behandlung transportiert werden, wobei dieser Reinraum mittels wenigstens einer Wandung gegenüber einer Umgebung abgegrenzt ist und weiterhin wenigstens eine Dichtungseinrichtung (12) zum Abdichten des Reinraums gegenüber dessen Umgebung vorgesehen ist, wobei diese Dichtungseinrichtung wenigstens zwei bezüglich einander bewegliche Elemente und/oder Wandungen aufweist, dadurch gekennzeichnet, dass der Reinraum (20) zwischen einer Bodeneinheit (4) und einer Deckeneinheit (6) ausgebildet ist und wenigstens die Bodeneinheit (4) oder die Deckeneinheit (6) als tragende Einheit ausgebildet ist und innerhalb des Reinraums Stützelemente (32, 34, 36) zum Abstützen der Deckeneinheit (6) und/oder der Bodeneinheit (4) angeordnet sind.

## Beschreibung

Die vorliegende Erfindung bezieht sich auf eine Vorrichtung und ein Verfahren zum Behandeln von Behältnissen. Aus dem Stand der Technik sind unterschiedliche Vorrichtungen und Verfahren zum Behandeln von Behältnissen bekannt. So sind beispielsweise Fülleinrichtungen bekannt, welche Behältnisse befüllen oder auch Umformungsmaschinen wie beispielsweise Blasformmaschinen, welche Kunststoffvorformlinge zu Kunststoffbehältnissen umformen. Die vorliegende Erfindung wird insbesondere in Bezug auf derartige Blasformmaschinen beschrieben.

In jüngerer Zeit ist es bekannt geworden, derartige Maschinen wie Blasformmaschinen aber auch Füllmaschinen steril auszuführen. Dies bedeutet, dass die Behandlung der Behältnisse wie etwa eine Befüllung oder die Blasformung von Kunststoffvorformlingen zu Kunststoffflaschen in einem Reinraum abläuft, wobei dieser Reinraum ein Sterilraum ist, der gegenüber einer (unsterilen) Umgebung abgeschirmt ist. Zu diesem Zweck ist teilweise ein hoher Aufwand an Wandungen und Stützelementen nötig. Dabei stellt sich weiterhin das Problem, dass ein derartiger Reinraum nach einem Sterilisationsprozess leicht zugänglich sein soll. Daneben soll jedoch auch eine hohe Stabilität des Reinraums und auch der darin angeordneten Anordnung ermöglicht sein.

Aus der EP 2 504 244 B1 ist eine Vorrichtung, insbesondere eine Füllmaschine, bekannt, welche einen solchen Reinraum aufweist. In dieser Druckschrift wird vorgeschlagen, tragende Elemente in der Art eines Gerüsts außerhalb des Reinraums anzuordnen. Diese Vorgehensweise führt zu einer zufriedenstellenden Stabilität, hat jedoch den Nachteil, dass die Maschine vergleichsweise schwer zugänglich ist, da die gerüstartige Struktur den freien Zugang zu der Maschine behindert. Daneben verleiht eine solche äußere Gerüststruktur der Maschine den Anschein einer improvisierten Anlage.

Ausgehend von dem Stand der Technik stellt sich daher dem Fachmann die Aufgabe, derartige Maschinen mit einem Reinraum herzustellen, die einerseits eine hohe Stabilität ermöglichen, andererseits jedoch den Zugang zu der Maschine nicht erheblich beeinträchtigen. Dies wird erfindungsgemäß durch eine Vorrichtung nach den unabhängigen Patentansprüchen erreicht. Vorteilhafte Ausführungsformen und Weiterbildungen sind Gegenstand der Unteransprüche.

Eine erfindungsgemäße Vorrichtung zum Behandeln von Behältnissen weist eine Transporteinrichtung auf, welche die Behältnisse wenigstens abschnittsweise entlang eines vorgegebenen Transportpfads transportiert. Weiterhin ist eine Vielzahl von Behandlungseinrichtungen und/oder Behandlungsstationen vorgesehen, welche die Behältnisse wenigstens zeitweise während des Transports entlang des Transportpfads (und insbesondere wenigstens zeitweise während sie sich in Bewegung befinden) behandelt. Bevorzugt ist die wenigstens eine Behandlungseinrichtung an der Transporteinrichtung angeordnet und wird bevorzugt von dieser Transporteinrichtung bewegt und/oder transportiert.

Weiterhin weist die Vorrichtung einen Reinraum auf, innerhalb dessen die Behältnisse während ihrer Behandlung transportiert werden, wobei dieser Reinraum mittels wenigstens einer Wandung (und bevorzugt mittels einer Vielzahl von Wandungen) gegenüber einer Umgebung abgegrenzt ist und weiterhin eine Dichtungseinrichtung zum Abdichten des Reinraums gegenüber dessen Umgebung vorgesehen ist, wobei diese Dichtungseinrichtung wenigstens zwei bezüglich einander bewegliche Elemente und/oder Wandungen aufweist.

Erfindungsgemäß ist der Reinraum zwischen einer Bodeneinheit und einer Deckeneinheit ausgebildet und wenigstens die Bodeneinheit und/oder die Deckeneinheit ist als tragende Einheit ausgebildet und weiterhin sind innerhalb des Reinraums Stützelemente zum Abstützen der Deckeneinheit und/oder der Bodeneinheit (und/oder der Deckeneinheit gegenüber der Bodeneinheit angeordnet.

Im Gegensatz zu dem beschriebenen Stand der Technik wird daher vorgeschlagen, dass es einen Boden des Reinraums und einen Deckel bzw. eine Deckeneinrichtung des Reinraums gibt, die selbst als tragende Elemente ausgeführt sind und die wie unten genau beschrieben, insbesondere auch dazu geeignet sind, die Dichtungseinrichtung zu tragen.

Bei einer bevorzugten Ausführungsform sind daher in die Bodeneinheit und/oder die Deckeneinrichtung die Dichtungseinrichtung oder Bestandteile der Dichtungseinrichtung integriert.

Weiterhin sind im Gegensatz zu der oben beschriebenen Anordnung nach dem Stand der Technik Stützelemente des Reinraums, und insbesondere tragende Stützelemente im Inneren des Reinraums angeordnet. Auf diese Weise können die tragenden Strukturen des Reinraums hinter Wandungen, welche den Reinraum begrenzen angeordnet werden und sind daher für den Benutzer nicht sichtbar.

Vorteilhaft handelt es sich bei der Vorrichtung um eine Blasformmaschine oder eine Füllmaschine und insbesondere um eine Blasformmaschine. Bevorzugt handelt es sich bei der Blasformmaschine um eine Streckblasmaschine. Bevorzugt weisen dabei die einzelnen Behandlungsstationen jeweils Blasformträger und Blasformen auf, sowie auch Blasdüsen, welche an die Kunststoffvorformlinge ansetzbar sind, um diese zu expandieren. Daneben weisen diese Umformungsstationen bevorzugt auch Reckstangen auf, welche in die Kunststoffvorformlinge einführbar sind, um diese in ihrer Längsrichtung zu dehnen.

Dabei ist es möglich und bevorzugt, dass eine Mechanik und/oder Antriebe, beispielsweise zum Bewegen der Reckstangen selbst außerhalb des Reinraums angeordnet sind.

Besonders bevorzugt ist dieser Reinraum ringförmig und/oder in der Art eines Torus und insbesondere eines Torus mit geraden Wänden ausgebildet. Auf diese Weise kann die Größe eines Reinraums reduziert werden. Bevorzugt werden daher beispielsweise die Behältnisse innerhalb des Reinraums transportiert aber eine Drehachse der Transporteinrichtung und/oder Bereiche der Transporteinrichtung wie beispielsweise eines Blasrads befinden sich außerhalb des Reinraums.

Besonders bevorzugt handelt es sich bei der Dichtungseinrichtung um eine hydraulische Dichtungseinrichtung und insbesondere ein sog. Wasserschloss. Dieses Wasserschloss kann dabei einen umlaufenden Kanal aufweisen, der mit einer Flüssigkeit gefüllt ist und ein beweglicher Teil der Anordnung kann in dieser Flüssigkeit (insbesondere in der Art eines Schwertes) geführt werden, um auf diese Weise die Beweglichkeit zu erreichen, andererseits jedoch eine hydraulische Abdichtung.

Besonders bevorzugt weist die Abdichtungseinrichtung zwei Dichtungseinrichtungen bzw. zwei derartige Wasserschlösser bzw. hydraulische Dichtungen auf. Dabei können die Querschnitte der Kanäle, in denen die Flüssigkeit geführt wird, eine unterschiedliche Größe aufweisen. Besonders bevorzugt ist eine untere Dichtungseinrichtung vorgesehen, die im Wesentlichen unterhalb des Transportpfads der Behältnisse (und/oder der Umformungsstationen) ist, sowie eine obere Dichtungseinrichtung, die bevorzugt oberhalb des Transportpfads der Behältnisse (und/oder der Umformungsstationen) ist.

Die vorliegende Erfindung ist weiterhin auf eine Vorrichtung zum Behandeln von Behältnissen gerichtet, welche eine von einer Transporteinrichtung gebildete kreis- oder teilkreisförmige Transportstrecke aufweist, auf der die Behältnisse zumindest mit jeweils einem eine Behältnisöffnung aufweisenden Teilbereich innerhalb eines von einer Einhausung zur Umgebung hin begrenzten sterilen Reinraums bewegt werden. Dabei ist ein Teilabschnitt dieser Einhausung an der Transporteinrichtung und wird mit dieser mitbewegt und ein weiterer Teilabschnitt der Einhausung ist an mit der Transporteinrichtung nicht mitbewegten Vorrichtungsgestell der Vorrichtung vorgesehen.

Weiterhin besteht die Einhausung zumindest in dem weiteren Teilabschnitt aus einer von Wandelementen gebildete Wandstruktur, die den Reinraum der Wandstruktur der Einhausung zur Umgebung hin begrenzt. Weiterhin ist eine tragende Struktur vorgesehen, wobei die Elemente der tragenden Struktur eine Vielzahl von quer- oder senkrecht zu einer Transportrichtung der Transporteinrichtung orientierte Träger aufweist, die mit einem Ende mit mechanischen Verbindungen befestigt sind. Weiterhin sind an dem Übergang zwischen den Teilabschnitten Labyrinth- und/oder Siphondichtungen vorgesehen und der Reinraum ist zwischen einer Bodeneinheit und einer Deckeneinheit ausgebildet und wenigstens die Bodeneinheit und/oder die Deckeneinheit sind als tragende Elemente (der tragenden Struktur) ausgebildet und innerhalb des Reinraums sind Stützelemente (der tragenden Struktur) zum Abstützen der Deckeneinheit und/oder der Bodeneinheit angeordnet.

Bei einer weiteren bevorzugten Ausführungsform weist wenigstens eine Dichtungseinrichtung einen mit einer Flüssigkeit befüllbaren umlaufenden Kanal auf, wobei dieser Kanal in der Deckeneinheit ausgebildet ist. Bei einer weiteren bevorzugten Ausführungsform weist die Vorrichtung wenigstens eine Dichtungseinrichtung mit wenigstens einem mit einer Flüssigkeit befüllbaren umlaufenden Kanal auf, wobei dieser Kanal in der Bodeneinheit ausgebildet ist.

Bevorzugt ist sowohl in der Deckeneinheit als auch in der Bodeneinheit ein derartiger umlaufender Kanal ausgebildet. Dies bedeutet, dass die Deckeneinheit und/oder die Bodeneinheit insofern als tragende Einheiten ausgebildet sind, dass sie in der Lage sind, den besagten Kanal, einschließlich einer in diesem Kanal befindlichen Flüssigkeit zu tragen.

Besonders bevorzugt ist an dem drehenden Teil, d. h. dem Teil der Transporteinrichtung der sich dreht, ein Schwert oder ein Eintauchmittel vorgesehen, welches in den Kanal und insbesondere die dort befindliche Flüssigkeit eintaucht. So kann beispielsweise dieses Schwert an einem drehbaren Träger, an dem die Umformungsstationen angeordnet sind, vorgesehen sein.

Bei einer weiteren bevorzugten Ausführungsform weist die Bodeneinheit und/oder die Deckeneinheit eine Wandungsstärke auf, die wenigstens 4 mm, bevorzugt wenigstens 5 mm und besonders bevorzugt wenigstens 6 mm beträgt. Durch diese Wandungsstärken kann eine ausreichende Stabilität der Bodeneinheit und/oder der Deckeneinheit erreicht werden. Die Bodeneinheit und/oder Deckeneinheit ist zumindest auch in der Lage ist die Dichtungseinrichtung bzw. den umlaufenden Kanal zu tragen.

Bei einer weiteren bevorzugten Ausführungsform ist auch ein Abschnitt der Bodeneinheit gleichzeitig ein Abschnitt des Kanals. So kann der Kanal dadurch ausgebildet sein, dass an der Bodeneinheit senkrecht, bzw. vertikal (oder auch schräg) verlaufende (insbesondere parallele) Wände gebildet sind, zwischen denen eine Flüssigkeit angeordnet werden kann. Es wäre jedoch auch möglich, dass der Kanal eigenständig ausgebildet ist, beispielsweise U- oder V-förmig und an der Bodeneinheit und/oder der Deckeneinheit angeordnet, beispielsweise mit dieser verschweißt ist. Auch auf diese Weise kann die Stabilität der Bodeneinheit und/oder der Deckeneinheit erhöht werden.

Besonders bevorzugt weist die Bodeneinheit und/oder die Deckeneinheit eine Wandungsstärke auf, die geringer ist als 30 mm, bevorzugt geringer als 25 mm, bevorzugt geringer als 20 mm, bevorzugt geringer als 15 mm und bevorzugt geringer als 10 mm. Durch diese Abgrenzungen wird erreicht, dass das Gewicht der Boden- und/oder Deckeneinheit nicht übermäßig hoch wird. Damit ist hier wesentlich, einen Kompromiss zu finden, zwischen einer ausreichenden Wandungsstärke der Boden- und/oder Deckeneinheit einerseits und andererseits einem noch vergleichbar geringen Gewicht (und auch geringeren Herstellungskosten).

Bei einer weiteren bevorzugten Ausführungsform sind die Stützelemente Säulenelemente, welche die Bodeneinheit mit der Deckeneinheit verbinden. Bevorzugt bewirken diese Säulen, dass innerhalb des Reinraums über eine formschlüssige Verbindung die Bodeneinheit und die Deckeneinheit positioniert werden.

Bevorzugt sind dabei diese Säulenelemente an einem Rand des Reinraums angeordnet und können auch beispielsweise an unten genauer beschriebenen Wandungselementen angeordnet bzw. befestigt sein. Auf diese Weise wird durch die Säulenelemente das hygienische Konzept des Reinraums nicht oder nur in geringer Weise beeinträchtigt. Auf der anderen Seite kann durch eine geeignete Positionierung der Säulenelemente, beispielsweise an Ecken des Reinraums gewährleistet werden, dass dieser in noch vorteilhafter Weise zugänglich ist. Bevorzugt sind diese Säulenelemente als Hohlprofile ausgebildet.

Bei einer weiteren bevorzugten Ausführungsform ist der Reinraum auch durch Seitenwände begrenzt, wobei diese Seitenwände bevorzugt nicht tragend ausgebildet sind. In diesem Fall ist es möglich, vergleichsweise dünne Bleche zu verwenden, welche die Seitenwände ausbilden. Bevorzugt sind auch die Bodeneinheit und/oder die Deckeneinheit aus Blechen beispielswiese Stahlblechen ausgebildet. Die Seitenwände können dabei beispielsweise an den Stützelementen befestigt sein.

Dabei können diese Seitenwände eine Wandstärke aufweisen, die geringer ist als 6 mm, bevorzugt geringer als 5 mm, bevorzugt geringer als 4mm und besonders bevorzugt geringer als 3 mm.

Auch wäre es möglich, dass die Seitenwände miteinander befestigt sind. Besonders bevorzugt weist wenigstens eine dieser Seitenwände und weisen mehrere Seitenwände Öffnungen auf. Diese Öffnungen können beispielsweise als Schleusen zum Einführen von Kunststoffvorformlingen oder zum Ausführen von Behältnissen dienen. Daneben kann es sich bei den Öffnungen auch um Revisionsöffnungen handeln, welche ein Arbeiten im Inneren des Reinraums ermöglichen. Weiterhin können diese Öffnungen auch externen Aggregaten dienen, beispielsweise für Roboterarme, welche zum Austausch von Blasformen oder von Füllelementen geeignet und bestimmt sind.

Bei einer weiteren bevorzugten Ausführungsform weist die Vorrichtung einen Basisträger auf, an dem die Bodeneinheit angeordnet ist. An diesem Basisträger kann die Bodeneinheit beispielsweise mittels weiteren Stützelementen befestigt sein.

Bei einer weiteren bevorzugten Ausführungsform weist die Vorrichtung wenigstens eine Traverse und insbesondere eine Tragtraverse auf. Diese Tragtraverse kann sich beispielsweise in einer horizontalen Richtung erstrecken. Vorteilhaft sind zwei oder mehrere derartiger Tragtraversen vorgesehen. An diesen Traversen können beispielsweise weitere Elemente befestigt sein, wie Belüftungseinheiten, Reckstangen-Bewegungseinheiten und dergleichen. Bevorzugt verbindet diese Tragtraverse wenigstens zwei Stützelemente miteinander.

Bei einer weiteren bevorzugten Ausführungsform ist es auch möglich, dass eine derartige Rahmentraverse auch zum Tragen bzw. Transport der gesamten Vorrichtung dient. Im Stand der Technik wurden zum Teil externe Rahmentraversen an der tragenden Plattform unten angehoben. Derartige Rahmentraversen sind jedoch relativ aufwendig und teuer und müssen in der Regel separat verschifft werden und auf einer Baustelle wiederum gesucht und bewegt werden.

Es wird daher bei dieser Ausgestaltung vorgeschlagen, dass eine Konstruktion der Traverse und insbesondere eine Schweißkonstruktion in den Maschinenaufbau integriert wird. Gleichzeitig kann diese tragende Konstruktion bzw. diese Traverse tragende Aufgaben für weitere Maschinenfunktionen wie etwa einen Blasdüsen-Kurventräger, eine Abstützung für die Deckeneinheit oder auch eine Aufnahme von Lüftungstechnik ermöglichen. Auf diese Weise wird eine Funktionsintegration erreicht, welche wiederum zu Kosteneinsparungen führt.

Die Anmelderin behält sich vor, auf diese Ausgestaltung mit den Traversen eigenständig Schutz zu beanspruchen. Dies bedeutet, dass die hier beschriebene Traverse auch unabhängig von der Ausgestaltung des Reinraums mit seinen Stützelementen beansprucht werden kann.

Bevorzugt ist die oder sind die Tragtraversen außerhalb des Reinraums angeordnet. Bevorzugt stellt die oder stellen diese Tragtraversen eine mechanische (zumindest mittelbare) Verbindung zwischen zwei Stützelementen her.

Bei einer weiteren vorteilhaften Ausführungsform dient also die Tragtraverse auch zum Tragen von weiteren Einheiten der Vorrichtung, wobei diese weiteren Einheiten bevorzugt aus einer Gruppe von Einheiten ausgewählt sind, welche Führungskurven, Blaskurven, Träger, Dachabstützungen, Lüftungselemente und dergleichen enthält.

Weitere Ausführungsformen und vorteilhafte Ausgestaltungen ergeben sich aus den beigefügten Zeichnungen:

Darin zeigen:
- Fig. 1: eine grobschematische Darstellung einer Vorrichtung zum Behandeln von Behältnissen;
- Fig. 2: eine Darstellung einer Reinraumkonstruktion für die vorliegende Erfindung;
- Fig. 3: eine Darstellung einer Bodeneinheit;
- Fig. 4: eine Darstellung der Bodeneinheit mit Stützelementen;
- Fig. 5: eine Darstellung der Deckeneinheit von unten;
- Fig. 6: eine Darstellung der Deckeneinheit von oben;
- Fig. 7: eine Zusammenstellung der Bodeneinheit und der Deckeneinheit;
- Fig. 8: eine Darstellung des Reinraums mit Wandungen;
- Fig. 9, 10: zwei Darstellungen zur Veranschaulichung der Abstützung des Reinraums gegenüber einem Trägergestell;
- Fig. 11: eine weitere Darstellung zur Veranschaulichung der vorliegenden Erfindung, und
- Fig. 12: eine weitere Darstellung zur Veranschaulichung der Erfindung.

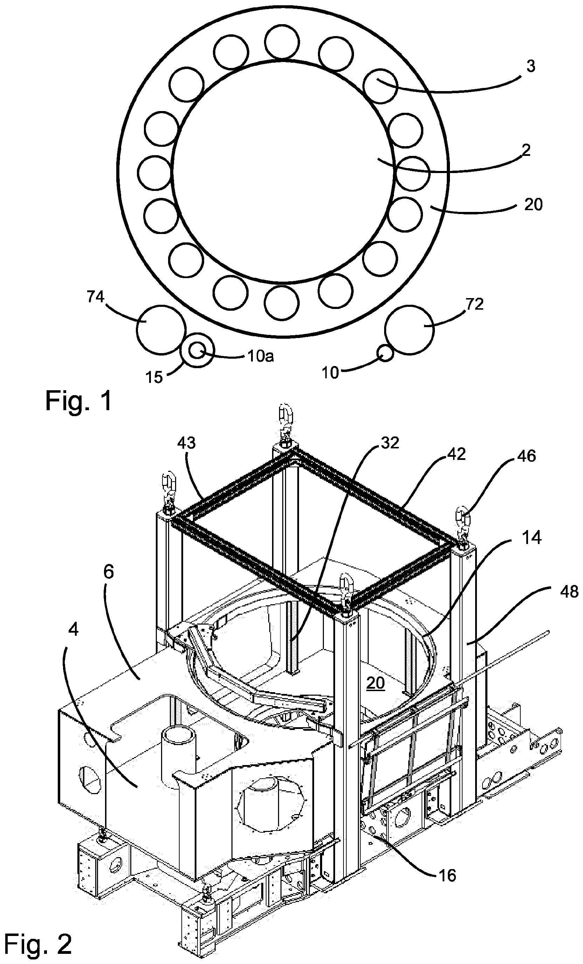

Figur 1 zeigt eine grobschematische Darstellung einer erfindungsgemäßen Vorrichtung 1 zum Behandeln von Behältnissen. Dabei werden hier Kunststoffvorformlinge 10 der Anlage zugeführt und mit einer Vielzahl von Umformungsstationen 3 zu Kunststoffflaschen oder allgemein Kunststoffbehältnissen 15 expandiert. Das Bezugszeichen 10a kennzeichnet eine Mündung der Kunststoffbehältnisse, welche sich während des Umformungsprozesses nicht verändert bzw. nicht expandiert wird.

Das Bezugszeichen 20 kennzeichnet einen Reinraum, der hier zwischen den beiden kreisförmigen Linien ausgebildet ist und innerhalb dessen die Behandlung der Behältnisse stattfindet. Das Bezugszeichen 72 kennzeichnet eine Zuführeinrichtung, etwa einen Transportstern, der der Vorrichtung die Kunststoffvorformlinge 10 zuführt und das Bezugszeichen 74 kennzeichnet eine Abführeinrichtung, bevorzugt ebenfalls einen Transportstern, der die gefertigten Kunststoffbehältnisse von der Vorrichtung abführt.

Figur 2 zeigt eine Darstellung zur Erläuterung eines erfindungsgemäßen Reinraums 20. Dabei bezieht sich das Bezugszeichen 4 auf eine Bodeneinheit und Bezugszeichen 6 auf eine Deckeneinheit. Diese beiden Einheiten sind wie oben erwähnt bevorzugt als tragende Elemente ausgeführt und begrenzen den Reinraum 20 nach unten und nach oben hin. Das Bezugszeichen 14 kennzeichnet eine in der Deckeneinheit 6 ausgebildete Dichtungseinrichtung, die zum Abdichten des Reinraums gegenüber der Umgebung dient. Dabei ist hier ein umlaufender Kanal ausgebildet, innerhalb dessen eine Flüssigkeit geführt werden kann. Das Bezugszeichen 32 kennzeichnet ein Stützelement, welches die Deckeneinheit 6 gegenüber der Bodeneinheit 4 abstützt. Dieses Stützelement verläuft dabei im Inneren des Reinraums. Man erkennt, dass eine Vielzahl derartiger Stützelemente vorgesehen ist.

Das Bezugszeichen 48 kennzeichnet einen Längsträger, der sich her ebenfalls in vertikaler Richtung erstreckt und der bevorzugt außerhalb des Reinraums angeordnet ist. An diesen Längsträgern 48 sind zwei Traverse 42,43 und auch weitere Traversen vorgesehen. Diese Traversen bilden hier ein Rechteck aus. Das Bezugszeichen 46 kennzeichnet ein Tragemittel, mittels dessen die ganze Vorrichtung angehoben und transportiert werden kann.

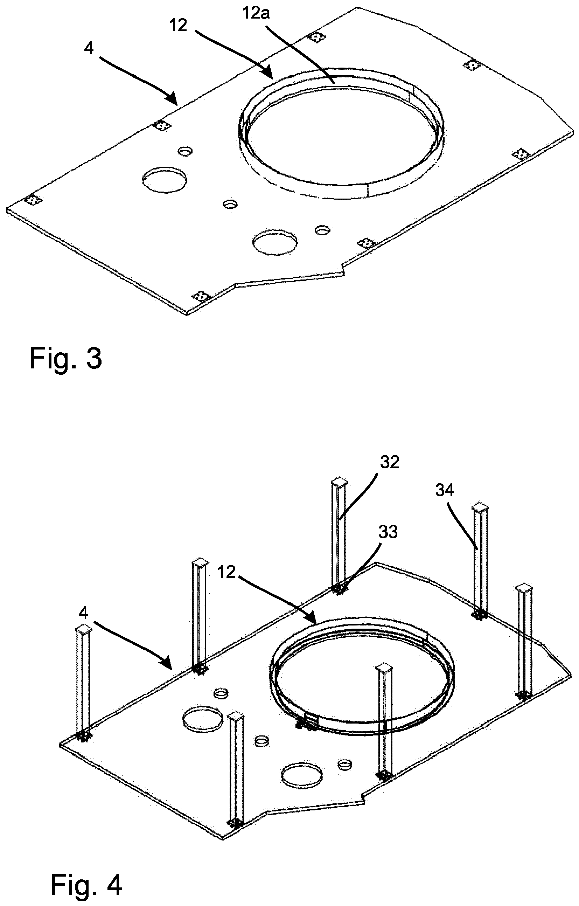

Figur 3 zeigt eine Darstellung der Bodeneinheit 4. Dabei ist hier wieder die Dichtungseinrichtung 12 und genauer der umlaufende Kanal 12a vorgesehen, der in der Bodeneinheit 4 ausgebildet ist. Da die Bodeneinheit als tragende Einheit ausgebildet ist, ist sie auch in der Lage den Kanal und auch einen mit Flüssigkeit gefüllten Kanal zu tragen, ohne dass es zu Verbiegungen kommt.

Bei der in Figur 4 gezeigten Darstellung sind an der Bodeneinheit Stützelemente 32 und 34 mittels Verbindungselementen 33 angeordnet. Bei diesen Verbindungselementen kann es sich insbesondere um Schraubelemente handeln, es währe jedoch auch eine Verschweißung möglich.

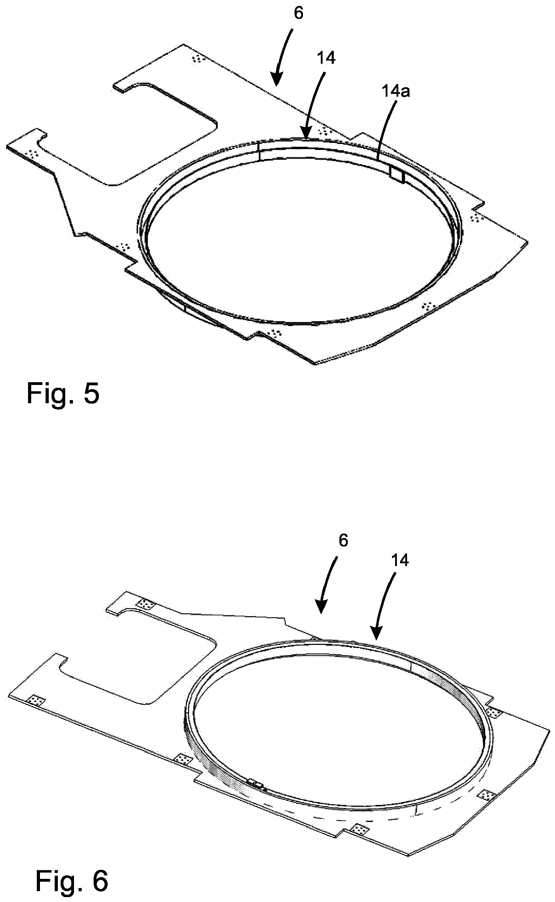

Figur 5 zeigt eine Ansicht von oben der Deckeneinheit. Auch hier ist wieder eine Dichtungseinrichtung 14 vorgesehen, welche entsprechend einen umlaufenden Kanal 14a aufweist.

Figur 6 zeigt eine Ansicht von unten auf die Deckeneinheit, wobei auch hier wieder die Dichtungseinrichtung, die Bestandteil eines Wasserschlosses ist, gezeigt ist. Der Querschnitt des umlaufenden Kanals der Dichtungseinrichtung 14 ist größer als der Querschnitt des umlaufenden Kanals der Dichtungseinrichtung 12.

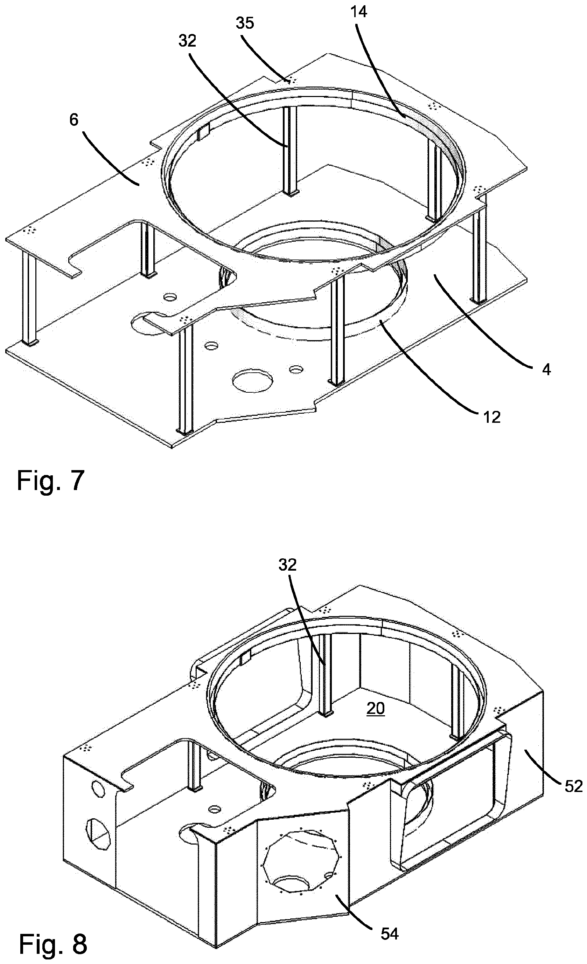

Figur 7 zeigt die gesamte Anordnung des Reinraums aus der der Bodeneinheit 4 der Deckeneinheit 6 und den Stützelementen 32 sowie auch den Verbindungen 35. Man erkennt hier, dass die Dichtungseinrichtung 12 der Bodeneinheit einen kleineren Querschnitt bzw. Durchmesser aufweist als die Dichtungseinheit 14, die in der Deckeneinheit 6 angeordnet ist.

Figur 8 zeigt eine weitere Darstellung des Reinraums. Dabei sind hier zusätzlich Wandungselemente 52, 54 dargestellt, welche den Reinraum zu der Umgebung hin abgrenzen. Diese Wandungselemente 52, 54 sind jedoch nicht als tragende Elemente ausgebildet.

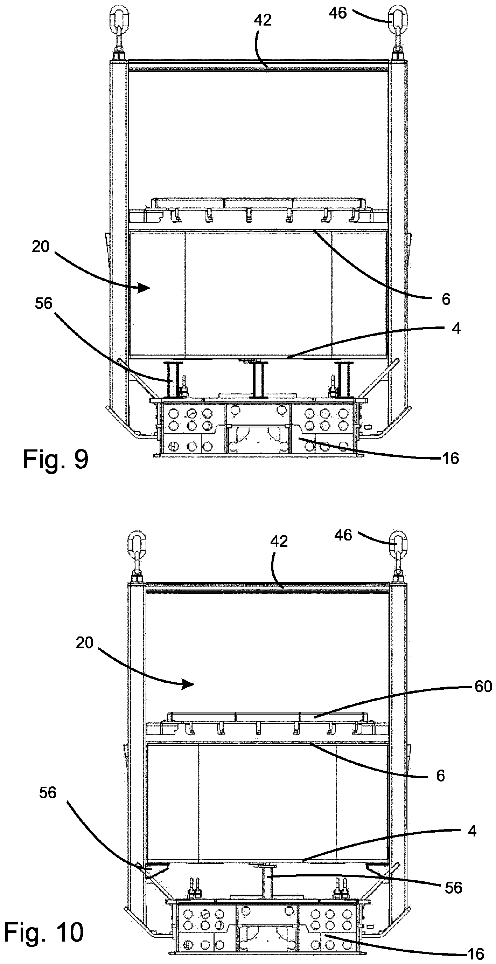

Figur 9 zeigt eine Gesamtdarstellung des Reinraums 20, der auf einem Gestell bzw. einer Trägereinheit 16 angeordnet ist. Dabei sind hier Stützelemente 56 vorgesehen, die den Reinraum 20 gegenüber der Trägereinheit 16 abstützen. Daneben ist auch hier die Quertraverse 42 wie oben beschrieben erkennbar.

Figur 10 zeigt eine weitere Darstellung, wobei hier Stützelemente 58 in Form von Winkelträgern vorgesehen sind. Daneben ist jedoch auch ein zentraler Träger 56 vorgesehen. Das Bezugszeichen 60 kennzeichnet einen Querträger, der zum Befestigen von Aufbauten wie etwa Ventilblöcken, Reckstangen, Antrieben und dergleichen dient.

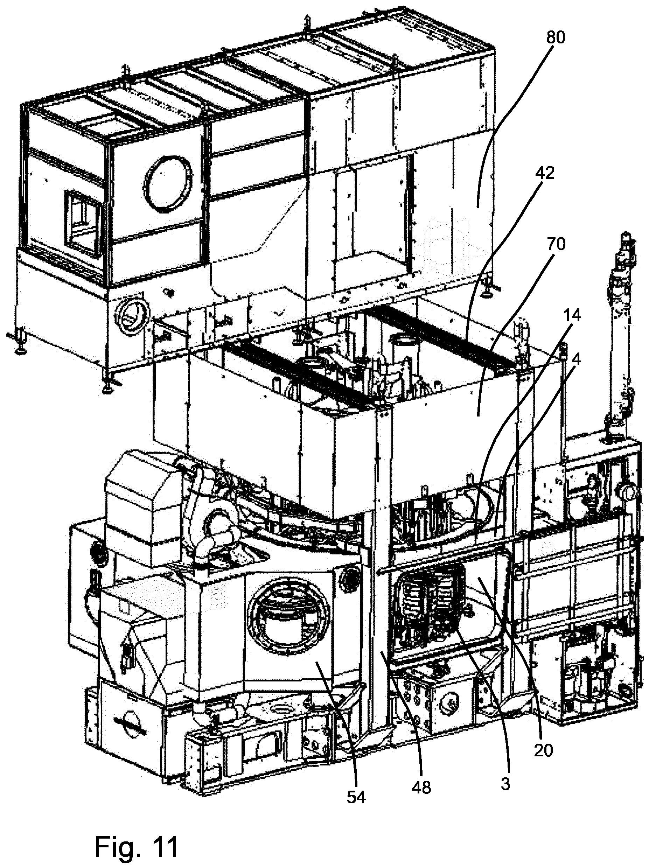

Figur 11 zeigt eine Gesamtdarstellung einer erfindungsgemäßen Vorrichtung. Dabei sind hier Behandlungsstationen 3 in Form von Umformungsstationen vorgesehen. Das Bezugszeichen 20 kennzeichnet wiederum den Reinraum, innerhalb dessen diese Umformungsstationen geführt werden. Daneben ist auch die obere Dichtungseinrichtung 14, die in der Deckeneinheit 4 angeordnet ist erkennbar. Auch sind wiederum die Wandungselemente 54 erkennbar.

Oberhalb der Deckeneinheit ist ein weiterer Aufbau 70 vorgesehen, in dem Elemente integriert sein können, wie beispielsweise Reckstangen, Antriebe und dergleichen. Diese Einheit ist bevorzugt außerhalb des Reinraums angeordnet, der wie oben erwähnt zwischen der Bodeneinheit und der Deckeneinheit gebildet wird. Daneben ist auch wieder die Traverse 42 erkennbar. Diese kann hier auch zum Tragen weiterer Einheiten 80 wie etwa einer Drucklufterzeugungseinheit bzw. einer Lüftungseinheit verwendet werden.

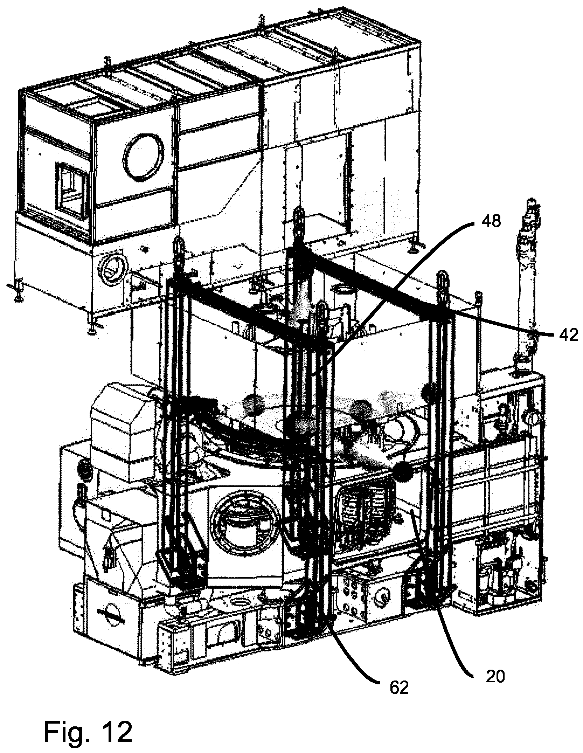

Figur 12 zeigt eine andere Darstellung, wobei hier die Stützelemente hervorgehoben sind. Man erkennt, dass hier Längselemente 48 vorgesehen sind, die (außerhalb des Reinraums) am Boden an den Hauptträger bzw. dem Basisträger 16 befestigt sind. Das Bezugszeichen 62 kennzeichnet Befestigungseinrichtungen zum Befestigen der Längselemente 48.

Die Anmelderin behält sich, vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Behandeln von Behältnissen (10) mit einer Transporteinrichtung (2), welche die Behältnisse (10) wenigstens abschnittsweise entlang eines vorgegebenen Transportpfads (T) transportiert und mit einer Vielzahl von Behandlungseinrichtungen, welche die Behältnisse wenigstens zeitweise während des Transports entlang des Transportpfads behandeln, wobei die Vorrichtung (1) einen Reinraum (20) aufweist, innerhalb dessen die Behältnisse während ihrer Behandlung transportiert werden, wobei dieser Reinraum mittels wenigstens einer Wandung gegenüber einer Umgebung abgegrenzt ist und weiterhin wenigstens eine Dichtungseinrichtung (12, 14) zum Abdichten des Reinraums gegenüber dessen Umgebung vorgesehen ist, wobei diese Dichtungseinrichtung wenigstens zwei bezüglich einander bewegliche Elemente und/oder Wandungen aufweist,
**dadurch gekennzeichnet, dass**
der Reinraum (20) zwischen einer Bodeneinheit (4) und einer Deckeneinheit (6) ausgebildet ist und wenigstens die Bodeneinheit (4) oder die Deckeneinheit (6) als tragende Einheit ausgebildet ist und innerhalb des Reinraums Stützelemente (32, 34, 36) zum Abstützen der Deckeneinheit (6) und/oder der Bodeneinheit (4) angeordnet sind.

2. Vorrichtung (1) zum Behandeln von Behältnissen (10), mit einer von einer Transporteinrichtung (2) gebildeten kreis- oder teilkreisförmigen Transportstrecke, auf der die Behältnisse (10) zumindest mit jeweils einem eine Behältnisöffnung (10a) aufweisenden Teilbereich innerhalb eines von einer Einhausung (4, 6, 52, 54) zur Umgebung hin begrenzten sterilen Reinraums (20) bewegt werden, wobei ein Teilabschnitt der Einhausung (4, 6, 52, 54) an der Transporteinrichtung (2) und mit dieser mitbewegt und ein weiterer Teilabschnitt (4, 6, 52, 54) der Einhausung (4,6,54, 54) an dem mit der Transporteinrichtung (2) nicht mitbewegten Vorrichtungsgestell (16) der Vorrichtung (1) vorgesehen sind, wobei die Einhausung (4, 6, 52, 54) zumindest in dem weiteren Teilabschnitt (4, 6, 52, 54) aus einer von Wandelementen (52, 54) gebildeten Wandstruktur, die den Reinraum (20) der Wandstruktur der Einhausung (52, 54) zur Umgebung hin begrenzt, sowie aus einer tragenden Struktur (4, 6, 32, 34) besteht, wobei die Elemente der tragenden Struktur eine Vielzahl von quer oder senkrecht zu einer Transportrichtung Transporteinrichtung (2) orientierten Trägem (32, 34) aufweist, die mit einem Ende mit mechanischen Verbindungen befestigt sind, und dass am Übergang zwischen den Teilabschnitten Labyrinth- und/oder SiphonDichtungen (12, 14) vorgesehen sind, und der Reinraum (20) zwischen einer Bodeneinheit (4) und einer Deckeneinheit (6) ausgebildet ist und wenigstens die Bodeneinheit (4) oder die Deckeneinheit (6) als tragende Elemente der tragenden Struktur ausgebildet ist und innerhalb des Reinraums Stützelemente (32, 34) der tragenden Struktur zum Abstützen der Deckeneinheit (6) und/oder der Bodeneinheit (4) angeordnet sind.

3. Vorrichtung (1) nach wenigstens einem der vorangegangenen Ansprüche,
**dadurch gekennzeichnet, dass**
wenigstens eine Dichtungseinrichtung einen mit einer Flüssigkeit befüllbaren umlaufenden Kanal 12a aufweist, wobei dieser Kanal in der Deckeneinheit ausgebildet ist und/oder wenigstens eine Dichtungseinrichtung einen mit einer Flüssigkeit befüllbaren umlaufenden Kanal 14a aufweist, wobei dieser Kanal in der Bodeneinheit (4) ausgebildet ist.

4. Vorrichtung (1) nach wenigstens einem der vorangegangenen Ansprüche,
**dadurch gekennzeichnet, dass**
die Bodeneinheit (4) und oder die Deckeneinheit (6) eine Wandungsstärke von wenigstens 4 mm, bevorzugt wenigstens 5mm und besonders bevorzugt wenigstens 6 mm aufweist.

5. Vorrichtung (1) nach wenigstens einem der vorangegangenen Ansprüche,
**dadurch gekennzeichnet, dass**
die Stützelemente (32, 34, 36) Säulenelemente sind, welche die Bodeneinheit (4) mit der Deckeneinheit verbinden.

6. Vorrichtung (1) nach wenigstens einem der vorangegangenen Ansprüche,
**dadurch gekennzeichnet, dass**
der Reinraum (20) auch durch Seitenwände begrenzt ist, wobei diese Seitenwände bevorzugt nicht tragend ausgebildet sind.

7. Vorrichtung (1) nach wenigstens einem der vorangegangenen Ansprüche,
**dadurch gekennzeichnet, dass**
die Vorrichtung (1) einen Basisträger (14) aufweist, an dem die Bodeneinheit (4) angeordnet ist.

8. Vorrichtung (1) nach wenigstens einem der vorangegangenen Ansprüche,
**dadurch gekennzeichnet, dass**
die Vorrichtung (1) wenigstens eine Tragtraverse (42, 44) aufweist.

9. Vorrichtung (1) nach dem vorangegangenen Anspruch,
**dadurch gekennzeichnet, dass**
die Tragtraverse wenigstens zwei Stützelemente miteinander verbindet.

10. Vorrichtung (1) nach wenigstens einem der vorangegangenen Ansprüche 8 - 9, **dadurch gekennzeichnet, dass**
die Tragtraverse zum Tragen von weiteren Einheiten der Vorrichtung dient, wobei diese weiteren Einheiten bevorzugt aus einer Gruppe von Einheiten ausgewählt ist, welche Führungskurven, Blasdüsenkurventräger, Dachabstützungen, Lüftungselemente und dergleichen enthält.
